# EUROPEAN PATENT SPECIFICATION

(11) **EP 1 009 990 B1**
(45) Date of publication and mention of the grant of the patent: **15.11.2006**
(21) Application number: 97938809.7
(22) Date of filing: 04.09.1997
(51) Int. Cl.: G01N 1/20

(54) **APPARATUS FOR THE SAMPLING OF COAL DUST PARTICLES FROM A TRANSPORTING TUBE FOR SUCH PARTICLES**
GERÄT ZUR PROBENENTNAHME VON KOHLENSTAUB-PARTIKELN AUS EINEM TRANSPORT-ROHR FÜR SOLCHE PARTIKELN
ECHANTILLONNEUR DE PARTICULES POUSSIERE DE CHARBON DANS UNE CONDUITE DE TRANSPORT

(30) Priority: 04.09.1996 DK 95296
(43) Date of publication of application: 21.06.2000
(73) Proprietor: Wedell, Anders Sten, 3490 Kvistgaard (DK)
(72) Inventor: WEDELL, Anders, Sten, DK-3490 Kvistgaard (DK); NIELSEN, Soeren, Kragh, DK-2970 Hoersholm (DK); HAGEDORN-OLSEN, Jens, DK-3100 Hornbaek (DK); FREDSKILDE, Klaus, DK-3000 Helsingoer (DK)
(74) Representative: Nielsen, Leif
(86) International application number: PCT/DK1997/000367
(87) International publication number: WO 1998/010266

(56) References cited:
- DE-A- 2 508 340
- US-A- 4 442 720
- US-A- 4 479 393

## Description

The invention relates to an apparatus of the kind mentioned in the introductory clause of claim 1 for the sampling of coal dust particles.

Such apparatus is known from US-PS 4 479 393 and US-PS 4 442 720, which, however, are lacking the means for rotation of the extraction pipes around the axis of the transporting tube and consequently cannot be used for sampling according to international standard ISO 9931 or Danish standard DS/ISO 9931.

A dust sampling apparatus with a rotatable sampling probe arranged in a transporting tube is known for DE A 2 508 340.

Furthermore, a manually operated and portable apparatus is known, which apparatus can be caused to make said rotation, and which can be dimensioned and brought into use in accordance with the prescriptions of Danish Standard, DS/ISO 9931 relating to sampling of coal dust from a gas stream in a vertical pipe.

For use by sampling of the contents of coal dust particles in a gas stream in the transporting tube, said transporting tube has been provided with a opening (e.g. in the form of a sampling pipe socket for dustless connection) which can be plugged with a plug. Within the opening there may be arranged an air curtain lock or backblowing arrangement for preventing that parts of the gas stream escapes from the transporting tube when the plug has been removed.

When a sample from the gas should be taken, the plug is removed, and the collecting or sampling part of the apparatus, i.e. the sampler, consisting of extraction pipes with sampling tips, angular gear mechanism and the sampler shaft in the form of a common tube is manually inserted through the opening to the sampling position.

Thereupon said tubes and sampling tips are cleaned by means of preheated compressed air which is supplied through a reinforced hose. The preheated compressed air should heat the tubes and sampling tips in order to prevent condensate from occurring therein during the sampling.

While sampling tips, extraction pipes, common tube and a cyclone are subjected to a given extraction pressure via the reinforced hose, the collection part is manually caused to rotate once around the axis of the transporting tube in a given number of seconds, e.g. 240 seconds according to the standard and at a constant speed. During this operation the coal dust particles and gas will be extracted from the transporting tube. The coal dust particles will be separated in the cyclone and taken to the sampling bottle.

After termination of the sampling the tubes are cleaned with compressed air, and the apparatus is removed from the transporting tube the opening of which then is plugged.

All the above mentioned operations such as control of the valves determining the pressure of heated blowing air and pressure of extracting air in the reinforced hose, is made manually.

It is the purpose of the invention to provide an apparatus of the kind initially mentioned which can carry out sampling according to ISO 9931 or the like, and where disadvantages by a manual control and handling of the apparatus are eliminated.

This purpose is achieved with the apparatus of the kind mentioned above, which according to the invention is characterized by the features stated in the characterizing clause of claim 1.

Thereby is achieved that the apparatus can be used for sampling according to the above mentioned international standard or a similar standard providing same quality of the sampling, and that its chamber can be permanently connected to an opening in a transporting tube for a mixture of gas and coal dust particles, because the chamber is protected against accumulation of dust particles by an arrangement of active dust expulsion. Furthermore, all operations having hitherto been carried out manually with the known apparatus for use according to the ISO standard, can now be controlled by a control unit being programmed therefor and so that it at given times of the day automatically can bring the apparatus into its sampling position, control the valves for at given times to regulate the blowing and extracting pressures, turn the extraction pipes of the collection part and after the sampling operation bring the apparatus back into its resting position in its chamber. This process can also in a well known way be started manually by pusing a button or from a distant control room by means of a relay.

The invention will now be described in more detail with reference to the drawing in which
Fig. 1 shows a cross section of a transporting tube with the rotatable extraction pipes of the collection part in the apparatus brought into a sampling operation in the transporting tube,

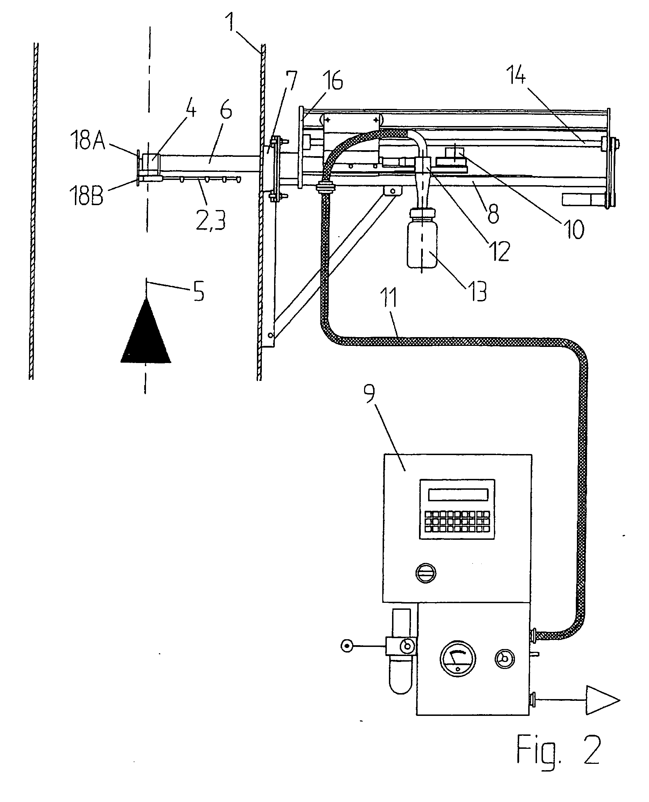

Fig. 2 shows the inner parts of the apparatus, said parts being arranged in the chamber, and the rotatable extraction pipes of the sampling part projecting into the transporting tube, and a controlling unit connected to the apparatus,
Fig. 3 shows the apparatus with the rotatable extraction pipes of the sampling parts in its resting or stand-by position in the chamber outside the transporting tube, and
Fig. 4 shows the apparatus with the rotatable extraction pipes of the sampling parts in the sampling position in the transporting tube.

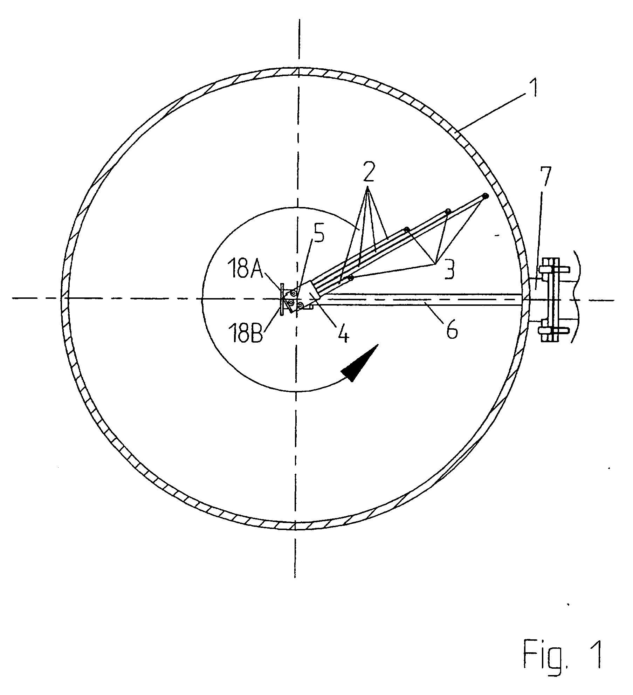

Fig. 1 shows a circular transporting tube 1, four extraction pipes 2 each with a sampling tip 3, a mechanical power transmission 4, e.g. an angular gear mechanism or a bearing construction with a toothed belt, by means of which the extraction pipes can be caused to rotate around the axis 5 of the transporting tube 1, said extraction pipes 2 are connected to the sampler shaft in the form of a common tube 6 having a flange to which the chamber 8 of the apparatus can be firmly connected.

The extraction pipes 2 with the sampling tips 3 can by means of an automatic driving mechanism 10 be brought to rotate once around the axis of the transporting tube 1 and at a given extraction pressure through a reinforced hose 11 to take a gas stream with coal particles through a cyclone 12, wherein the coal particles are separated and fall into a sample bottle or container 13. The sample container 13 can be a scale for automatic reception and automatic weighing of the separated coal particles which after the weighing automatically may be taken back to the transporting tube 1.

After completion of the sampling the extraction pipes 2 can by means of the driving mechanism 10 be brought into a position in which they are arranged in parallel to the common tube 6 pointing towards the opening 7 of the transporting tube 1.

Thereupon the sampling parts 2, 3 can by means of an automatic driving means, e.g. a live spindle or shaft 14 be pulled out from the transporting tube 1 and pushed into the chamber 8. Here the common tube 6, the extraction pipes 2 and the sampling tips 3 can be automatically be cleaned by means of preheated compressed air through the reinforced hose 11.

At the time when the next sampling should be made, the tube is cleaned again and the sampling part 2, 3 is by means of the live spindle 14 brought into a position in the transporting tube 1 for a new sampling.

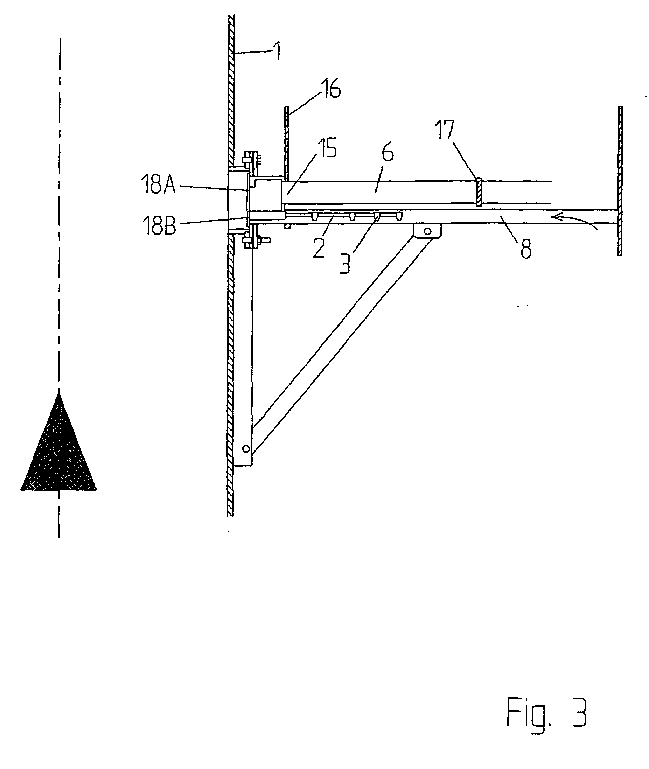

Fig. 3 shows the apparatus in its stand-by position, where the opening 7 in the transporting tube 1 is tightly closed by a two-parted cover 18A, 18B being connected to the sampling parts 2, 3. While the sampling parts are taken into the transporting tube 1, compressed air is blown continuously through the chamber 8 and out into the transporting tube 1 and to an air curtain lock or backblowing arrangement at an opening 15 around the common tube 6 in a partition wall 16. Thus it is prevented that gas from the transporting tube 1 during the movement of the sampling parts passes into the chamber 8 and out through the opening 15 around the common tube 6.

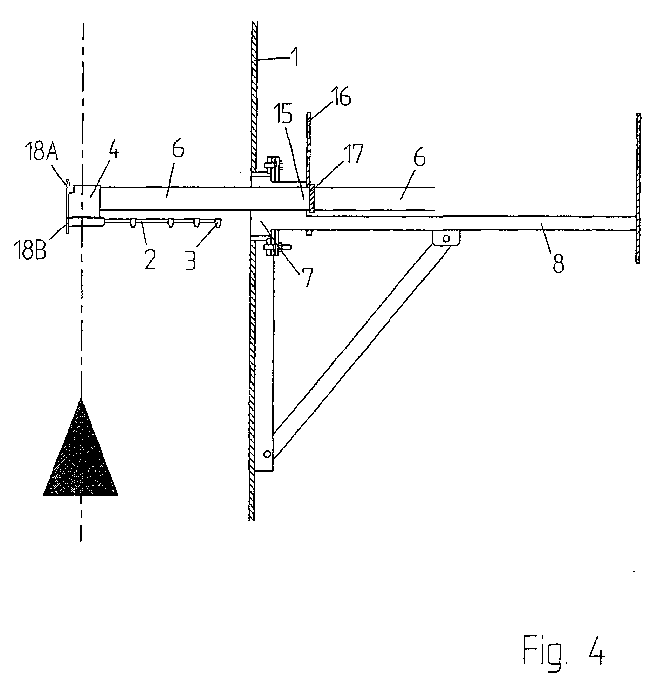

Fig. 4 shows the apparatus in a sampling position. Here a sealing 17, fastened around the common tube 6 is abutting the frame of the opening 15, and supply of compressed air has ceased. Gas from the transporting tube is thereafter prevented from passing through the space between the outer surface of the common tube 6 and the boundaries of the opening 15.

During return of the sampling parts 2, 3 from the sampling position to the stand-by position, compressed air is again entered, and the jets are cleaned simultaneously.

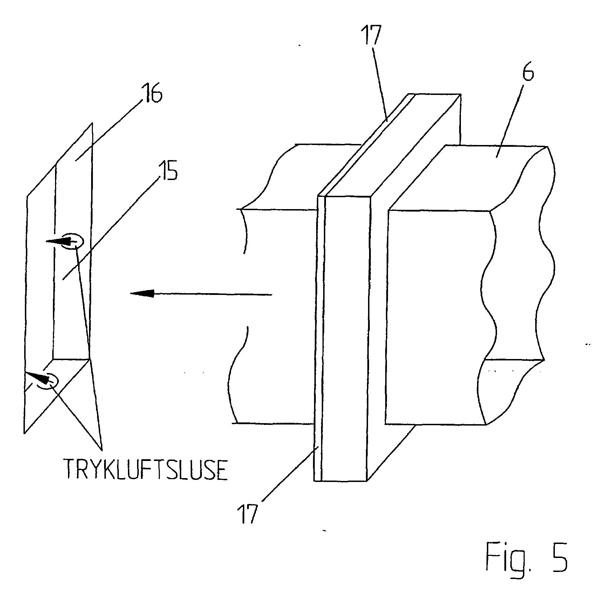

Fig. 5 shows the air curtain lock or backblowing arrangement in the opening 15, arranged in the partition wall 16, and the sealing 17, which has been secured around the common tube 6 and which can be caused to abut the surrounding frame of the opening 15.

## Claims

1. Apparatus for the sampling of coal dust particles being transported by a gas stream in a circular transporting tube (1) from a coal pulverizer to a coal burner, and comprising sampling parts (2-4) having in their longitudinal directions unequally long, parallel beside each other arranged extraction pipes (2), which, when the sampling parts have entered the transporting tube, at their ends directed away from the axis of the transporting pipe each are connected to sampling tips (3) having an opening which can be directed towards the gas stream and which can transfer a collected sample of gas with coal dust particles through the extraction pipes (2) and further through a common tube (6) leading out through an opening in the transporting tube (1) to a cyclone (12) which can separate the coal dust particles and transfer them to a sample container (13), said apparatus comprising a chamber (8) which at its one end has an opening to be connected to an opening (7) in the transporting tube (1), and an automatic driving mechanism (10) for displacing the sampling parts (2-4) of the apparatus back and forth between two positions, to a stand-by position in which the sampling parts of the apparatus comprising extraction pipes (2) and sampling tips (3) for said sampling have been arranged in the chamber (8), and to a sampling position in which the sampling parts (2-4) is arranged in the extraction-or sampling position in the transporting tube (1), **characterized in that** the sampling parts (2-4) comprises in their longitudinal directions according to DS/ISO 9931 unevenly long extraction pipes, which, when the sampling parts have entered the transporting tube via a mechanical transmission, e.g. an angular gear mechanism, can be caused to rotate around the axis (5) of the transporting tube (1) in a sampling plane perpendicularly to the axis and thus make a isokinetic collection in the sampling position in the transporting tube (1), and that the apparatus has means for the formation of such flow of compressed air in the chamber (8) and in the common tube (6) that coal dust particles in the chamber (8) and the tube (6) are blown out and into the transporting tube (1) during the displacement of the sampling parts (2-4) towards the stand-by position of the sampler.

2. Apparatus according to claim 1, **characterized in that** the mechanical transmission for rotation of the parallel extraction pipes (2) or tip arms has a rotatable part and non-rotatable part, each of said parts supporting a part of a two-parted cover, the cover parts (18A, 18B) of which form the cover when the tip arms (2) after the isokinetic sampling have been rotated back to their starting position, ready for their displacement to the stand-by position.

3. Apparatus according to claim 1 or 2, **characterized in that** the opening (7) in the transporting tube (1) is adapted to be tightly sealed in the stand-by position of the sampling parts by a two-parted cover (18A, 18B) which is connected to the sampling parts (2-4).

4. Apparatus according to claim 1, 2 or 3, **characterized in that** the mechanical transmission comprises a toothed belt and a toothed wheel for the rotation of the tip arms, and that the transmission parts supporting the toothed wheel with the toothed belt and the one end of the tip arms which can be rotated therewith, respectively, each carries one of the two cover parts.

## Patentansprüche

1. Gerät zur Probeentnahme von von einem Gasstrom in einem kreisförmigen Transportrohr (1) von einem Kohlenmahlwerk zu einem Kohlenbrenner transportierten Kohlenstaubpartikeln, und umfassend Probeentnahmeteile (2-4), die in ihrer Längsrichtung ungleichartig lange, parallel nebeneinander angeordnete Extraktionsröhre (2) aufweisen, welche, wenn die Probeentnahmeteile in das Transportrohr eingetreten sind, jeweils an ihren von der Achse des Transportrohrs abgewandten Enden mit Probeentnahmedüsen (3) mit einer Öffnung verbunden sind, welche auf den Gasstrom ausrichtbar ist und eine aufgefangene Probe von Gas mit Kohlenstaubpartikeln durch die Extraktionsröhre (2) und weiter durch ein gemeinsames durch eine Öffnung im Transportrohr (1) ausführendes Rohr (6) in einen Zyklon (12) überführen kann, welcher die Kohlenstaubpartikeln abscheiden und sie in einen Probenbehälter (13) überführen kann, wobei das Gerät eine Kammer (8) umfasst, welche an einem Ende eine mit einer Öffnung (7) im Transportrohr (1) zu verbindende Öffnung und einen automatischen Antriebmechanismus (10) zum Versetzen hin und her von den Probeentnahmeteile (2-4) zwischen zwei Positionen, jeweils in eine Bereitschaftsstellung, in der die Probeentnahmeteile (2-4) des Gerätes umfassend Extraktionsröhre (2) und Probeentnahmedüsen (3) für das Probeentnahme in der Kammer (8) angeordnet worden sind, und in eine Probeentnahmeposition, in der die Probeentnahmeteile (2-4) in der Extraktions- oder Probeentnahmeposition im Transportrohr (1) angeordnet sind, aufweist, **dadurch gekennzeichnet, dass** die Probeentnahmeteile (2-4) in ihrer Längsrichtung gemäß DS/ISO 9931 Extraktionsröhre ungleicher Länge umfassen, welche, wenn die Probeentnahmeteile durch eine mechanische Übertragung, z.B. ein Winkelgetriebe, in das Transportrohr eingetreten sind, zum Drehen um die Achse (15) des Transportrohrs (1) in einer Ebene senkrecht zur Achse gebracht werden können und damit ein isokinetisches Auffangen in der Probeentnahmeposition im Transportrohr (1) durchführen, und dass das Gerät Mitteln für die Bildung eines derartigen Druckluftstrom in die Kammer (8) und in das gemeinsame Rohr (6) umfasst, so dass Kohlenstaubpartikeln in der Kammer (8) und im Rohr (6) in das Transportrohr (1) während des Versetzens der Probeentnahmeteile (2-4) in Richtung der Bereitschaftsstellung des Probenehmers ausgeblasen werden.

2. Gerät nach Anspruch 1, **dadurch gekennzeichnet, dass** die mechanische Übertragung zum Rotieren der parallelen Extraktionsröhre (2) oder Düsenarme einen rotierbaren Teil sowie einen nicht rotierbaren Teil aufweist, welche jeweils einen Teil einer zweiteiligen Deckel trägt, deren Deckelteile (18A, 18B) die Deckel bilden, wenn die Düsenarme (2) nach der isokinetischen Probeentnahme zurück in ihre Ausgangsposition rotiert worden sind und damit zum Versetzen in die Bereitschaftsstellung bereit sind.

3. Gerät nach Anspruch 1 oder 2, **dadurch gekennzeichnet, dass** die Öffnung (7) des Transportrohres (1) in der Bereitschaftsstellung der Probeentnahmeteile zur dichten Versiegelung durch einen mit den Probeentnahmeteilen (2-4) verbundenen zweiteiligen Deckel (18A, 18B) ausgeformt ist.

4. Gerät nach Anspruch 1, 2 oder 3, **dadurch gekennzeichnet, dass** die mechanische Übertragung zum Rotieren der Düsenarme einen Zahnriemen und ein Zahnrad umfasst, und dass die das Zahnrad mit dem Zahnriemen und das damit rotierbare Ende der Düsenarme tragenden Übertragungsteile jeweils einen der zwei Deckelteile trägt.

## Revendications

1. Échantillonneur de particules de poussier transportées par un jet gazeux dans une manche de transport circulaire (1) d'un pulvérisateur à charbon à un brûleur à charbon, et comportant des éléments échantillonneurs (2-4) ayant dans les directions longitudinales des pipettes de prélèvement (2) parallèles, de longueurs irrégulières, situées l'une à côté de l'autre, qui, après l'entrée des éléments échantillonneurs dans la manche de transport, sont connectées chacune à leurs extrémités éloignées de l'axe du tube de transport à des extrémités d'échantillon (3) ayant une ouverture qui peut être orientée vers le jet gazeux et qui peut transférer un échantillon de gaz collecté avec des particules de poussier à travers les pipettes de prélèvement (2) et encore à travers une tube commune (6) traversant une ouverture dans la manche de transport (1) jusqu'à un cyclone (12) qui peut séparer les particules de poussier et les transférer à un container d'échantillon (13), ledit échantillonneur comprenant une chambre (8) qui comporte, à l'une de ses extrémités, une ouverture à être liée à une ouverture (7) dans le manchon de transport (1), et un mécanisme d'actionnement automatique (10) pour déplacer les éléments échantillonneurs (2-4) de l'échantillonneur vers l'avant et l'arrière entre deux positions, à une position d'attente dans laquelle les éléments échantillonneurs de l'échantillonneur contenant des pipettes de prélèvement (2) et des tubes d'échantillon (3) pour ledit échantillon sont arrangés dans la chambre (8), et à une position d'échantillon dans laquelle les éléments échantillonneurs (2-4) sont arrangés dans la position de prélèvement ou d'échantillon dans la manche de transport (1), **charactérisé en ce que** les éléments échantillonneurs (2-4) contiennent dans leurs directions longitudinales conforme à DS/ISO 9931 des pipettes de prélèvement de longueurs différentes qui, à l'entrée des éléments échantillonneurs dans la manche de transport par une transmission mécanique, par exemple un mécanisme de réducteur angulaire, peuvent être menées à entraîner en rotation autour de l'axe (5) de la manche de transport (1) dans un plan d'échantillon perpendiculairement à l'axe et faisant ainsi un prélèvement isocinétique dans la position d'échantillon dans la manche de transport (1), et que l'échantillonneur comprend des moyens pour la formation de tel courant d'air comprimé dans la chambre (8) et dans la tube commune (6) de sorte que des particules de poussier dans la chambre (8) et dans la tube (6) sont soufflées à la manche de transport (1) durant le déplacement des éléments échantillonneurs (2-4) dans la direction de la position d'attente de l'échantillonneur.

2. Échantillonneur selon la revendication 1, **caractérisée en ce que** la transmission mécanique pour l'entraînement en rotation des pipettes de prélèvement parallèles (2) ou des bras de la buse a une partie rotative et une partie non-rotative, chacune desdites parties portant une partie d'un couvercle en deux pièces, dont les parties du couvercle (18A, 18B) forment le couvercle au moment où les bras de la buse (2), après le prélèvement isocinétique, ont été entraînés en rotation vers l'arrière à leur position de départ prêts à leur déplacement à la position d'attente.

3. Échantillonneur selon la revendication 1 ou 2, **charactérisé en ce que** l'ouverture (7) dans la manche de transport (1) est adaptée pour être fermée de manière impénétrable dans la position d'attente des éléments échantillonneurs (2-4) par un couvercle en deux pièces (18A, 18B) lié aux éléments échantillonneurs (2-4).

4. Échantillonneur selon la revendication 1, 2 ou 3, **charactérisé en ce que** la transmission mécanique comprend une courroie dentée et une roue dentée pour l'entraînement en rotation des bras de la buse, et que les parties de transmission soutenant la roue dentée avec la courroie dentée et l'une des extrémités des bras de la buse qui peuvent être entraîné en rotation ainsi, portent chacune, respectivement, une des deux parties de couvercle.
